# EUROPÄISCHE PATENTSCHRIFT

(11) **EP 0 624 320 B1**
(45) Veröffentlichungstag und Bekanntmachung des Hinweises auf die Patenterteilung: **25.10.2000**
(21) Anmeldenummer: 94107403.1
(22) Anmeldetag: 11.05.1994
(51) Int. Cl.: A23L 1/317

(54) **Verfahren zur Herstellung eines Nahrungsmittelprodukts auf Fleischbasis**
Process for the preparation of a food product based on meat
Procédé de préparation d'un produit alimentaire à base de viande

(30) Priorität: 14.05.1993 DE 4316235
(43) Veröffentlichungstag der Anmeldung: 17.11.1994
(73) Patentinhaber: Duve, Manfred, D-58840 Plettenberg (DE)
(72) Erfinder: Duve, Manfred, D-58840 Plettenberg (DE)
(74) Vertreter: Fritz, Edmund Lothar, Dipl.-Chem.

(56) Entgegenhaltungen:
- DE-A- 4 007 194
- DE-B- 2 814 295
- US-A- 3 497 363
- US-A- 3 512 993

## Beschreibung

Die vorliegende Erfindung betrifft ein Verfahren zur Herstellung eines Nahrungsmittelprodukts auf Fleischbasis, bei dem man in einem ersten Schritt mageres Rindfleisch und/oder Schweinefleisch in einem Fleischwolf vorzerkleinert und dann in einem Kutter fein zerkleinert und das Eiweiß aufschließt unter Kühlung durch Zugabe von zerkleinertem Eis oder Schnee und bei dem man außerdem fettes Schweinefleisch zugibt zur Herstellung eines feinen Bräts.

Bei aus dem Stand der Technik bekannten Verfahren wird ein feines Brät zum Beispiel zur Herstellung von Bratwürsten verwendet. Ein solches Bratwurstbrät, das nach der Herstellung etwa die Viskosität eines Kuchenteigs hat und folglich nicht formstabil ist, muß nach dem Stand der Technik in Naturdärme gefüllt und dann weiterverarbeitet werden.

Aus der DE-A-40 07 194 ist ein Verfahren zur Herstellung eines Nahrungsmittelprodukts auf Fleischbasis bekannt, bei dem zunächst das Brät in Schäldärme gefüllt und gekocht wird. Nach dem Abkühlen wird der Schäldarm entfernt und das Produkt aufgeschnitten, jedoch in sehr feine Scheiben mit beispielsweise einer Stärke von etwa 0,5 mm, die dann anschließend bei einer Temperatur von 180°C frittiert werden. Durch das Aufschneiden in feine Scheiben wird dem Produkt beim Frittiervorgang größtenteils der Wassergehalt entzogen.

Aus der DE-B-28 14 295 ist ebenfalls ein Verfahren zur Herstellung eines Nahrungsmittelprodukts auf Fleischbasis bekannt, bei dem das Brät zum Beispiel unter Einsatz eines Vakuumfüllers in einen Preßstrang überführt wird. Der Preßstrang wird dann zunächst gegart und nach dem Abkühlen in Chips mit einer Dicke von 0,5 bis 2,0 mm geschnitten und anschließend bei erhöhter Temperatur getrocknet. Durch diesen Trockenvorgang wird dem Produkt der Wassergehalt weitgehend entzogen, so daß ein knuspriges Produkt erhalten wird.

Ausgehend von diesem Stand der Technik besteht die Aufgabe der vorliegenden Erfindung darin, ein stäbchenförmiges Nahrungsmittelprodukt und ein Verfahren zur Herstellung eines solchen Produkts zu schaffen, das ohne Verwendung eines Darms formstabil und über eine relativ lange Zeitdauer haltbar ist.

Die Lösung dieser Aufgabe liefert ein erfindungsgemäßes Verfahren mit den Merkmalen des Hauptanspruchs. Das nach diesem Verfahren erhältliche Nahrungsmittelprodukt auf Fleischbasis ist Gegenstand des Anspruchs 8. Die Herstellung des erfindungsgemäßen Nahrungsmittelprodukts erfolgt ohne Verwendung von Eiweißersatzstoffen und ohne Konservierungsmittel oder sonstige Zusatzstoffe, die lebensrechtlich bedenklich sind.

Im Gegensatz zum eingangs genannten Stand der Technik liefert das erfindungsgemäße Verfahren ein Nahrungsmittelprodukt bestehend aus einer gut schnittfesten Masse mit einer allseitig gleichmäßig gebräunten Oberfläche. Nach dem erfindungsgemäßen Verfahren wird das feine Brät mittels eines Vakuumfüllers portioniert, dessen Ausgang eine senkrecht angeordnete Förderschnecke vorgeschaltet ist, durch eine Lochplatte gepreßt, aus der das Brät in Strängen austritt, die anschließend über ein hinter der Lochplatte angeordnetes rotierendes Messer oder einen rotierenden Schneiddraht in einige Zentimeter lange Streifen geschnitten werden, die in ein unter dieser Dosiervorrichtung angeordnetes Wasserbad fallen und dort gebrüht werden, wobei in einem anschließenden Schritt die so erhaltenen gebrühten stäbchenartigen Streifen für eine relativ kurze Zeitdauer in siedendem Fett fritiert werden.

Um das dann erhaltene Fleischprodukt für eine ausreichende Zeitdauer haltbar zu machen, wird es in einem abschließenden Schritt in siedendem Fett fritiert. Das Fritieren erfolgt nur über eine relativ kurze Zeitdauer im Bereich von einer oder wenigen Minuten. Das so erhaltene kurzfritierte (vorfritierte) Nahrungsmittelprodukt kann dann in geeigneter Verpackung in den Handel gelangen. Vor dem Verzehr wird das erfindungsgemäße Nahrungsmittelprodukt vom Verbaucher vorzugsweise durch erneutes, gegebenenfalls längeres Fritieren oder im Backofen gegart.

Gemäß einer bevorzugten Weiterbildung des erfindungsgemäßen Verfahrens gibt man dem feinen Brät nach der Herstellung grob gewolftes mageres Fleisch (vorzugsweise Schweinefleisch) zu, das in dem Kutter bei einer niedrigeren Umdrehungszahl mit dem feinen Brät vermischt wird. Dadurch wird das Produkt stabilisiert und erhält einen besseren Biß.

Ein Teil des in dem erfindungsgemäßen Nahrungsmittelprodukts enthaltenen Fremdwassers stammt aus dem bei der Herstellung des feinen Bräts zugegebenen zerkleinerten Eis oder Schnee, dessen Zugabe in an sich bekannter Weise zur Kühlung erfolgt. Die erforderlichen Gewürze werden entweder zu Beginn oder während der Herstellung des feinen Bräts dem Fleisch zugegeben. Gemäß einer bevorzugten Variante des erfindungsgemäßen Verfahrens wird das erhaltene Nahrungsmittelprodukt nach dem Brühen zum Beispiel in einem Streifenschneider oder Speckschneider in längliche Streifen von einigen Zentimetern Länge geschnitten, so daß das Produkt etwa die Form von Pommes Frites hat.

Gemäß einer Variante der Erfindung wird in entsprechender Weise ein Nahrungsmittelprodukt auf Fleischbasis hergestellt, das einen reduzierten Fettgehalt aufweist. Der Fettgehalt dieses fettreduzierten Produktes kann bis zu 40 % geringer sein, wenn man die Fleischanteile, von denen man bei der Herstellung des feinen Bräts im ersten Verfahrensschritt ausgeht, entsprechend variiert und größere Fleischanteile mit geringerem Fettgehalt einsetzt.

Als Schneideinrichtung kann ein hinter der Lochplatte angeordnetes rotierendes Messer oder ein rotierender Schneiddraht dienen.

Nachfolgend wird die vorliegende Erfindung anhand eines Ausführungsbeispiels näher erläutert.

Die gemäß der Erfindung hergestellten "Fleischfritten" können vakuumverpackt in den Lebensmittelhandel gelangen und sind so eine ausreichende Zeit lang haltbar.

### Beispiel 1:

Nachfolgend wird die Herstellung eines erfindungsgemäßen Nahrungsmittelprodukts gemäß einer Variante des erfindungsgemäßen Verfahrens beschrieben, die sich besonders für die industrielle Fertigung dieses Produkts über eine Fertigungsstraße eignet.

In einem ersten Schritt wird ein feines Brät hergestellt. Dabei geht man für einen Ansatz von 100 kg (Fleischmasse) von den nachfolgend aufgeführten Fleischanteilen aus:
- 15 kg: Rindfleisch Kategorie R III*
- 25 kg: Schweinefleisch Kategorie S III*
- 15 kg: Schweinebacke Kategorie S IV*
- 15 kg: Speck Kategorie S VIII*

* Diese Kategorien entsprechen der im Fleischereiwesen üblichen Klassifizierung der Fleischsorten nach Bindegewebsgehalt, Eiweißgehalt, Fettgehalt etc.

Diesem Ansatz werden außerdem insgesamt 20 kg Eis zur Kühlung zugegeben.

Die Herstellung des feinen Bräts erfolgt ausgehend von den in der Tabelle oben angegebenen Fleischanteilen wie folgt. Die Fleischanteile werden gut gekühlt in einen Fleischwolf gegeben und darin auf eine Größe von 3 mm gewolft. Zu diesem im Fleischwolf vorzerkleinerten Material gibt man ca. 300 g Phosphat oder Zitrat (dies entspricht einer Menge von 3 g pro kg bezogen auf den Gesamtansatz). Das gewolfte Fleisch gibt man nun in einen Kutter und arbeitet ein Drittel der vorgesehenen Gesamtmenge zerkleinertes Eis (also ca. 6,6 kg) langsam während des Kutterns unter. Der Kutter arbeitet z.B. mit einer Umdrehungsgeschwindigkeit der Messer von bis zu etwa 4.000 Touren. Es kann beispielsweise ein handelsüblicher Kutter Modell 330 der Firma HOEGGER ALPINA Verwendung finden.

Man streut dann 2 kg Kochsalz ein (dies entspricht einer Menge von 20 g pro kg Gesamtansatz). Man kuttert dann die Masse bis die Temperatur auf 6° C bis 8° C angestiegen ist.

Danach erfolgt die Zugabe der restlichen zwei Drittel der zuzugebenden Eismenge (also ca. 13,4 kg), wobei das Eis wiederum langsam untergearbeitet wird. Es werden dann 400 g bis 600 g einer Gewürzmischung zugegeben (dies entspricht einer Menge 4 g bis 6 g pro kg des Gesamtansatzes). Außerdem erfolgt die Zugabe von Zuckerstoffen um dem Brät eine Tönung zu geben. Anschließend wird weiter gekuttert, bis die Temperatur des Bräts wieder auf 10° C angestiegen ist. Der gesamte Kuttervorgang kann etwa 4 bis 6 Minuten dauern. Diese Kutterzeit unterliegt jedoch Schwankungen, die abhängig sind von der Zusammensetzung der Fleischanteile, von denen man ausgeht und auch von Maschinenparametern abhängt, z.B. von der Schärfe der Messer.

Nach Abschluß des Kuttervorgangs gibt man dem feinen Brät 10 kg Schweinebauch der Kategorie S V zu, der zuvor in einem Fleischwolf auf die Größe von 5 mm gewolft wurde. Der Schweinebauch wird unter das Brät gezogen, um diesem einen besseren Biß zu geben. Dies kann in dem Kutter erfolgen, den man bei einer niedrigen Umdrehungszahl laufen läßt.

Anschließend gibt man das Brät in einen sogenannten Vakuumfüller, der beispielsweise auch für die Portionierung von Brät oder für das Verfüllen von Brät in Wurstdärme bei der Bratwurstherstellung verwendet wird. Der Ausgang dieses Vakuumfüllers erhält jedoch erfindungsgemäß einen besonderen Vorsatz. Dieser Vorsatz umfaßt eine senkrecht angeordnete Schneckenfördereinrichtung, an deren Ausgang ein Lochblech angeordnet ist, durch das das Brät mittels der Schnecke hindurch gepreßt wird. Die Löcher in diesem Lochblech können rund oder aber auch eckig sein, wichtig ist dabei nur, daß sie einen ausreichenden Abstand aufweisen, so daß das Brät nach dem Durchgang durch die Lochplatte sauber voneinander getrennte Stränge bildet, die sich nicht berühren. Diese Lochplatte befindet sich zum Beispiel in einem zylindrischen Gehäuse, in dem oberhalb der Lochplatte die Förderschnecke angeordnet ist. Unterhalb der Lochplatte und mit Abstand von dieser befindet sich am unteren Ende des zylindrischen Gehäuses, dort wo die Fleischbrätstränge aus diesem austreten, eine rotierendes Messer oder ein Schneiddraht, der jeweils einige Zentimeter lange Streifen von den senkrecht austretenden Fleischbrätsträngen abschneidet. Diese Streifen fallen dann in ein unter der Portioniereinrichtung des Vakuumfüllers angeordnetes Wasserbad mit kochendem Wasser und werden dort gebrüht. In diesem Wasserbad ist vorzugsweise ein Kettenförderband angeordnet, das wasserdurchlässig ist und auf das diese Streifen fallen. Das Ende des Kettenförderbands, auf das die Streifen fallen, die gebrüht werden sollen, liegt tiefer als das andere Ende des Förderbands. Dies bedeutet, das Förderband, das zum Beispiel endlos über zwei Kettenräder laufen kann, ist schräg angeordnet, so daß es eine schiefe Ebene bildet und die zu brühenden Streifen des Fleischbräts von der Stelle ausgehend, an der sie auf das Band fallen, sukzessive nach oben transportiert werden, so daß sie am anderen Ende des Kettenförderbands aus der Oberfläche des kochenden Wassers heraustreten. Diese gebrühten Streifen des Nahrungsmittelprodukts fallen dann über eine Rutsche oder dergleichen auf ein zweites ähnlich geartetes Kettenförderband, das sich in einem Bad mit siedendem Fett befindet, das hinter dem Wasserband in Förderrichtung angeordnet ist. In diesem zweiten Bad wird das Nahrungsmittelprodukt über eine kurze Zeitdauer fritiert. Das in diesem Fritierbad angeordnete Kettenförderband bildet wiederum in der oben geschilderten Weise eine schiefe Ebene. Das fertig fritierte Nahrungsmittelprodukt fällt am Ende dieses Förderbands auf ein weiteres Förderband und legt auf diesem eine Strecke zurück, die zum Abtropfen des Fetts dient. Gegebenenfalls kann man in dieser Fettabtropfzone zusätzlich ein Gebläse einsetzen, um den Abtropf- und Trocknungsvorgang zu beschleunigen. Danach gelangt das streifenförmige Nahrungsmittelprodukt in einen sogenannten Durchlauffroster, in dem ein ähnliches eine schiefe Ebene bildendes Förderband angeordnet sein kann. In diesem Durchlauffroster wird das Nahrungsmittelprodukt tiefgefroren bei zum Beispiel -40° C oder einer tieferen Temperatur. Nach Verlassen des Durchlauffrosters gelangt das fertige Nahrungsmittelprodukt auf eine Verpackungsstraße und wird dort unter Vakuum verpackt.

## Patentansprüche

1. Verfahren zur Herstellung eines Nahrungsmittelprodukts auf Fleischbasis, bei dem man in einem ersten Schritt mageres Rindfleisch und/oder Schweinefleisch in einem Fleischwolf vorzerkleinert und dann in einem Kutter fein zerkleinert und das Eiweiß auf schließt unter Kühlung durch Zugabe von zerkleinertem Eis oder Schnee und bei dem man außerdem fettes Schweinefleisch zugibt zur Herstellung eines feinen Bräts, dadurch gekennzeichnet, daß man das so hergestellte feine Brät mittels eines Vakuumfüllers portioniert, der einen Vorsatz aufweist mit einer senkrecht angeordneten Schneckenfördereinrichtung, mittels derer das Brät durch eine Lochplatte gepreßt wird, wobei mit Abstand unterhalb der Lochplatte eine rotierende Schneideinrichtung vorgesehen ist, die die Stränge des Bräts in Streifen schneidet, die dann in ein darunter angeordnetes Wasserbad fallen und dort gebrüht werden, wobei man in einem anschließenden Schritt die gebrühten stäbchenartigen Streifen für eine relativ kurze Zeitdauer in siedendem Fett fritiert.

2. Verfahren zur Herstellung eines Nahrungsmittelprodukts auf Fleischbasis nach Anspruch 1, dadurch gekennzeichnet, daß man das Nahrungsmittelprodukt nach dem Fritieren in siedendem Fett zunächst abtropfen oder trocknen läßt und dann tieffriert.

3. Verfahren zur Herstellung eines Nahrungsmittelprodukts auf Fleischbasis nach Anspruch 1 oder 2, dadurch gekennzeichnet, daß man dem feinen Brät nach der Herstellung grob gewolftes mageres Schweinefleisch zugibt, das in dem Kutter bei einer niedrigeren Umdrehungszahl mit dem feinen Brät vermischt wird.

4. Verfahren zur Herstellung eines Nahrungsmittelprodukts auf Fleischbasis nach einem der Ansprüche 1 bis 3, dadurch gekennzeichnet, daß man das abschließende Fritieren in siedendem Fett bei etwa 160° bis 200° für eine Zeitdauer von etwa einer halben Minute bis 3 Minuten durchführt.

5. Verfahren zur Herstellung eines Nahrungsmittelprodukts auf Fleischbasis nach einem der Ansprüche 1 bis 4,dadurch gekennzeichnet, daß man bei der Herstellung des Bräts zu Beginn Salz, Phosphat und Gewürze zugibt.

6. Verfahren zur Herstellung eines Nahrungsmittelprodukts auf Fleischbasis nach einem der Ansprüche 1 bis 5, dadurch gekennzeichnet, daß man bei der Herstellung des feinen Bräts Zuckerstoffe zugibt.

7. Verfahren zur Herstellung eines Nahrungsmittelprodukts auf Fleischbasis nach einem der Ansprüche 1 bis 6, dadurch gekennzeichnet, daß man im ersten Schritt bei der Herstellung des feinen Bräts einen höheren Anteil mageres Schweinefleisch und einen geringeren Anteil fettes Fleisch, insbesondere Speck, einsetzt, um ein Nahrungsmittelprodukt mit reduziertem Fettgehalt zu erhalten.

8. Nahrungsmittelprodukt auf Fleischbasis, erhältlich durch das Verfahren gemäß einem oder mehreren der Ansprüche 1 bis 7.

## Claims

1. Process for the preparation of a food product based on meat in which in a first step lean beef and/or pork is pre-minced in a mincing machine and then finely minced in a cutter, the albumen is disintegrated under being cooled by adding crushed ice or snow and in which additionally fat pork is added in order to produce a fine sausage meat, characterised in that the fine sausage meat produced in this manner is portioned by a vacuum charger having an attachment with a vertically arranged screw conveyor by means of which the sausage meat is pressed through a perforated plate, a rotating cutting device being provided at a distance below the perforated plate for cutting the extruded sausage meat in strips which then fall into a water bath arranged below and are boiled there, in a subsequent step the boiled rod-shaped strips are fried in boiling fat for a relatively short period of time.

2. Process for the preparation of a food product based on meat as claimed in claim 1, characterised in that the food product is drained or dried after having been fried in boiling fat and is deep-frozen thereafter.

3. Process for the preparation of a food product based on meat as claimed in claims 1 or 2, characterised in that coarsely minced lean pork is added to the fine sausage meat after the production thereof which is mixed with the fine sausage meat in the cutter at a low revolution speed.

4. Process for the preparation of a food product based on meat as claimed in any one of claims 1 to 3, characterised in that the final frying in boiling fat is carried out at about 160° to 200° over a period of time of about half a minute to 3 minutes.

5. Process for the preparation of a food product based on meat as claimed in any one of claims 1 to 4, characterised in that salt, phosphate and spices are added at the beginning of the production of the sausage meat.

6. Process for the preparation of a food product based on meat as claimed in any one of claims 1 to 5, characterised in that saccharides are added during the production of the fine sausage meat.

7. Process for the preparation of a food product based on meat as claimed in any one of claims 1 to 6, characterised in that in the first step during the production of the fine sausage meat a larger of lean pork and a smaller portion of fat meat, in particular bacon, is used in order to obtain a food product with reduced fat content.

8. Food product based on meat, produced by the process according to one or several of claims 1 to 7.

## Revendications

1. Procédé de préparation d'un produit alimentaire à base de viande où, dans une première étape, on soumet de la viande de boeuf maigre et/ou de la viande de porc maigre à un premier hachage dans un hachoir pour ensuite la hacher finement dans un hachoir fin, où les protéines sont ouvertes sous l'effet du froid par l'addition de glace pilée ou de neige et où on ajoute en outre de la viande de porc non maigre aux fins de produire une chair à saucisse fine, procédé caractérisé
en ce que la chair à saucisse fine ainsi préparée est divisée en portions au moyen d'un dispositif de remplissage présentant un élément de sortie pourvu d'un dispositif d'alimentation à vis sans fin disposé verticalement au moyen duquel la chair à saucisse est pressée à travers une filière, à une certaine distance plus bas étant prévu un dispositif de découpe rotatif qui découpe les cordons de chair à saucisse en tronçons qui tombent alors dans un bain d'eau disposé au dessous dans lequel ils sont bouillis, et où, dans une étape qui suit, les tronçons en forme de bâtonnets qui ont été bouillis sont frits pendant un laps de temps relativement court dans de la graisse bouillante.

2. Procédé de préparation d'un produit alimentaire à base de viande suivant la revendication 1, caractérisé en ce qu'après la friture, on laisse d'abord égoutter ou sécher le produit alimentaire avant de le congeler.

3. Procédé de préparation d'un produit alimentaire à base de viande suivant la revendication 1 ou la revendication 2, caractérisé
en ce qu'est additionné à la chair à saucisse fine préparée de la viande de porc maigre grossièrement hachée, qui est mélangée à la fine chair à saucisse dans le hachoir fin tournant à plus faible vitesse.

4. Procédé de préparation d'un produit alimentaire à base de viande suivant l'une quelconque des revendication 1 à 3, caractérisé
en ce que la triture finale dans la graisse bouillante se tait à une température de 160° à 200° et pendant une durée variant d'environ une demi-minute à environ trois minutes.

5. Procédé de préparation d'un produit alimentaire à base de viande suivant l'une quelconque des revendication 1 à 4, caractérisé
en ce qu'en début de préparation de la chair à saucisse, il y est ajouté du sel, du phosphate et des condiments.

6. Procédé de préparation d'un produit alimentaire à base de viande suivant l'une quelconque des revendication 1 à 5, caractérisé
en ce que, lors de la préparation de la fine chair à saucisse, il y est ajouté des glucides.

7. Procédé de préparation d'un produit alimentaire à base de viande suivant l'une quelconque des revendication 1 à 6, caractérisé
en ce que, dans la première phase de préparation de la fine chair à saucisse, est mise en oeuvre une plus grande part de viande de porc maigre, et une part plus faible de viande non maigre, de lard notamment, aux tins d'obtenir un produit alimentaire ayant une teneur en graisses plus faible.

8. Produit alimentaire à base de viande pouvant être obtenu par le procédé suivant l'une quelconque ou plusieurs des revendications 1 à 7.
